# FASCICULE DE BREVET EUROPEEN

(11) **EP 3 227 139 B1**
(45) Date de publication et mention de la délivrance du brevet: **28.10.2020**
(21) Numéro de dépôt: 15816816.1
(22) Date de dépôt: 23.11.2015
(51) Int. Cl.: B60Q 1/24

(54) **DISPOSITIF D'ÉCLAIRAGE ET/OU DE SIGNALISATION MOBILE D'ACCOMPAGNEMENT POUR VÉHICULE AUTOMOBILE**
MOBILE FOLLOW-ME-HOME-BELEUCHTUNGS- UND/ODER ANZEIGEVORRICHTUNG FÜR EIN KRAFTFAHRZEUG
MOBILE FOLLOW-ME-HOME LIGHTING AND/OR INDICATING DEVICE FOR A MOTOR VEHICLE

(30) Priorité: 03.12.2014 FR 1461833
(43) Date de publication de la demande: 11.10.2017
(73) Titulaire: PSA Automobiles SA, 78300 Poissy (FR)
(72) Inventeur: LE DALL, Christophe, 92150 Suresnes (FR); DESSERPRIT, Olivier, 91460 Marcoussis (FR); GONCALVES, Whilk Marcelino, 75013 Paris (FR); GACOIN, Nicolas, 91380 Chilly Mazarin (FR)
(86) Numéro de dépôt international: PCT/FR2015/053175
(87) Numéro de publication internationale: WO 2016/087745

(56) Documents cités:
- EP-A1- 2 799 286
- DE-A1- 10 338 756
- JP-A- 2009 057 014
- US-A1- 2007 030 136
- US-A1- 2014 091 709

## Description

La présente invention est relative à un dispositif permettant d'assurer l'illumination de la zone qui entoure notamment l'avant d'un véhicule automobile à l'arrêt.

Elle se rapporte plus particulièrement à un dispositif d'éclairage et/ou de signalisation mobile (dynamique) permettant d'assurer une illumination de ladite zone quelle que soit la position du conducteur ou d'un passager se situant à l'extérieur de ce véhicule et qui se déplacent dans cette zone, afin de les accompagner au cours de leurs déplacements dans ladite zone.

Les véhicules actuels disposent en règle générale, montée en série, d'une commande automatique et temporisée, mise en œuvre dès que le véhicule est à l'arrêt et qui provoque l'allumage des feux de croisement, voire d'une veilleuse/plafonnier à l'intérieur de l'habitacle, pour produire un éclairement global de la zone extérieure au véhicule, permettant à l'utilisateur de se déplacer dans des conditions à peu près satisfaisantes en bénéficiant de cet éclairement.

Notamment, une telle commande a l'avantage d'éclairer l'environnement du véhicule pendant un laps de temps déterminé avant d'être automatiquement stoppée, permettant par exemple de se diriger dans la nuit à l'extérieur ou dans un local sombre, comme un garage ou un parking, pour atteindre en pleine sécurité la sortie de ce local. Toutefois, l'inconvénient d'un tel allumage temporisé des feux de croisement est que, ni l'orientation de l'éclairement fourni, ni la puissance de celui-ci, ne sont modifiables. La durée de l'allumage de ces feux est par ailleurs paramétrable avec l'ordinateur de bord du véhicule.

On connait notamment du document FR2929193B1 un dispositif d'éclairage pour réaliser un éclairage à orientation variable dans l'environnement entourant un véhicule automobile, environnement découpé en une pluralité de secteurs voisins et consécutifs autour de ce véhicule. La carrosserie de celui-ci est équipée d'un ensemble de capteurs de position, sensibles à la présence de l'utilisateur dans un secteur couvert par le champ de sensibilité du capteur intéressant ce secteur, afin de commander l'allumage et/ou l'extinction d'une ou de plusieurs sources lumineuses différentes équipant le véhicule et aptes à éclairer de manière optimale ce secteur.

Lorsque l'utilisateur, notamment le conducteur ou un passager sortant du véhicule, se déplace autour et par rapport à celui-ci, il influence par sa seule présence un ou plusieurs des capteurs de position portés par la carrosserie, qui commandent en séquence une ou plusieurs sources lumineuses propres à éclairer les secteurs successifs couverts par ces capteurs, en fonction du déplacement de l'utilisateur.

On connait également du document FR2797614, un dispositif d'éclairage et/ou de signalisation agencé à l'intérieur du projecteur pour adopter plusieurs configurations d'éclairage.

Le dispositif d'éclairage comprend à cet effet, un équipage mobile autour d'axes parallèles orientés en Z.

L'équipage mobile comprend trois rangées de trois modules d'éclairage et/ou de signalisation aptes à se déplacer en rotation autour de leurs axes de rotation respectifs parallèles suivant Z.

Chaque rangée de modules participe à la création d'un faisceau lumineux qui coopère les unes avec les autres pour former un faisceau lumineux global adaptable en fonction des conditions d'utilisation du véhicule.

Le système d'entraînement des modules comprend un mécanisme d'entraînement à base de bielle(s) tel que décrit, notamment, dans le document FR2797677.

La fonction d'éclairement variable d'accompagnement appelée également « Follow me » en terminologie anglo-saxonne, et telle que décrite dans le document FR2929193, ne permet pas d'offrir une fonction d'accompagnement agile d'une part en terme de rotation des modules d'éclairage et, d'autre part, en terme de fluidité de l'accompagnement lumineux du conducteur ou d'un passager se situant à l'extérieur du véhicule et qui se déplace dans la zone entourant le véhicule.

D'autre part, les modules d'éclairage et/ou de signalisation tournants des documents FR2797614 et FR2797677 ne sont pas spécifiquement dédiés pour implémenter une fonction de type « Follow me » : l'amplitude de rotation des modules tournants est limitée à 45° de part et d'autre d'un axe parallèle à la direction longitudinale du véhicule. Enfin, le document EP 2 799 286A1 décrit un dispositif d'éclairage comportant un module rotatif ayant plusieurs faces remplissant des fonctions différentes.

La présente invention propose une fonction d'éclairage d'accompagnement du conducteur et/ou des passagers du véhicule qui met en scène différents modules tournants avec une grande diversité tant dans les mouvements/cinématique des modules tournants que dans l'intensité et/ou la couleur de l'éclairage des modules tournants.

Pour cela, la présente invention repose sur une succession de rotations de 0° à 180° (et inversement) des modules tournant autour de leurs axes de rotation respectifs répondant à des lois de commande déterminées et qui respectent la réglementation relative à l'éclairage automobile

La rotation des modules peut être synchrone ou asynchrone, la vitesse de rotation dépendante ou indépendante d'un module à l'autre. Avantageusement, l'intensité et la couleur de l'éclairage de chaque module peuvent varier en accord avec l'ambiance lumineuse intérieure du véhicule.

Les différentes animations permettent ainsi à la fois d'offrir une fonction « Follow me » optimale et une mise en valeur du véhicule en termes d'attractivité et d'identité de la marque du véhicule.

A cet effet la présente invention a pour premier objet un dispositif d'éclairage et/ou de signalisation d'accompagnement d'un véhicule automobile, apte à illuminer une zone s'étendant autour du véhicule et pendant un cycle de durée déterminée, ledit dispositif comportant au moins une première source de lumière blanche et au moins des premier et deuxième modules d'éclairage et/ou de signalisation tournants adjacents, aptes à générer respectivement des faisceaux lumineux suivant des directions déterminées. Le dispositif suivant l'invention est défini dans la revendication 1.

Selon une caractéristique, le dispositif comporte au moins une deuxième source de lumière apte à générer un faisceau lumineux en direction de la deuxième face des modules tournants ; ladite source de lumière étant apte à générer une lumière à couleur changeante.

Selon une autre caractéristique, ledit organe de commande est apte à orienter la première face du module tournant le plus à l'extérieur du véhicule quand il est monté dans le véhicule, vers le ou les occupants détectés puis suivis par le dispositif de détection durant leurs déplacements dans ladite zone.

Selon une autre caractéristique, le dispositif comprend un troisième module tournant disposé entre les premier et deuxième modules ; les premier et troisième modules tournants étant synchronisés entre eux.

La présente invention a pour deuxième objet, un projecteur de véhicule automobile comportant un boitier supportant à rotation des modules tournants d'un dispositif tel que décrit ci-dessus.

La présente invention a pour troisième objet, un procédé de commande d'un dispositif d'éclairage tels que décrit ci-dessus. Le procédé suivant l'invention est défini dans la revendication 6.

Ledit procédé consiste, dans la durée déterminée à commander une première rotation d'au moins un des modules tournants d'un angle d'au moins 180° autour de son axe de rotation suivant un premier sens de rotation, suivie d'une deuxième rotation selon un deuxième sens de rotation opposé au premier pour effectuer un balayage de la zone.

Selon une caractéristique, le procédé consiste dans la durée déterminée, à détecter qu'au moins un occupant du véhicule est dans la zone et à commander la rotation d'au moins un des modules tournants pour éclairer la zone en suivant les déplacements du ou des occupants du véhicule à l'extérieur du véhicule, dans ladite zone.

Selon une autre caractéristique, il consiste à commander une diminution progressive de l'intensité de l'éclairage et/ou de signalisation d'accompagnement à la fin de la période déterminée.

Selon une autre caractéristique, il consiste à commander une diminution progressive de l'intensité de l'éclairage et/ou de signalisation d'accompagnement à la fin de la période déterminée, en fonction de la diminution progressive de l'intensité de l'éclairage d'ambiance intérieur du véhicule.

Selon une autre caractéristique, il consiste à commander un changement de couleur de l'éclairage et/ou de signalisation d'accompagnement en fonction du changement de couleur de l'éclairage d'ambiance intérieur du véhicule.

D'autres caractéristiques d'un dispositif selon l'invention, apparaîtront encore à travers la description qui suit d'exemples de réalisation, donnés à titre indicatif et non limitatif, en référence au dessin annexé sur lequel :
- - la figure 1 est une vue en perspective montrant un véhicule automobile équipé de projecteurs intégrant un dispositif d'éclairage et/ou de signalisation mobile selon l'invention ;
- la figure 2 est une section dans le plan horizontal XY, schématique, en vue de dessus, illustrant le dispositif d'éclairage et/ou de signalisation mobile selon l'invention comportant trois modules mobile en rotation autour de l'axe Z ;
- la figure 3 illustre, schématiquement, une section transversale d'un des deux projecteurs (suivant X) passant par l'axe d'un des modules tournants selon l'invention, dans une position d'illumination de la zone avant du véhicule ;
- la figure 4 illustre un premier exemple d'animation visuelle d'une fonction d'éclairage et/ou de signalisation d'accompagnement de type « classique » ;
- la figure 5 illustre l'animation de la figure 4 sous forme de chronogramme vitesse de rotation (angle vs temps) des modules et intensité lumineuse (% intensité fonction d'éclairage vs temps) ;
- la figure 6 illustre un second exemple d'animation visuelle d'une fonction d'éclairage et/ou de signalisation d'accompagnement de type « intelligent » ;
- la figure 7 illustre l'animation de la figure 6 sous forme de chronogramme vitesse de rotation (angle vs temps) des modules et intensité lumineuse (% intensité fonction d'éclairage vs temps) ; et
- la figure 8 donne la légende des symboles utilisés dans les figures 4 à 7.
On définit par rapport au véhicule 1 (et donc par rapport au projecteur 2) un repère orthogonal XYZ comprenant trois axes perpendiculaires deux à deux, à savoir :
- un axe X, définissant une direction longitudinale, horizontale, confondue avec la direction générale de déplacement du véhicule 1,
- un axe Y, définissant une direction transversale, horizontale, qui avec l'axe X définit un plan XY horizontal,
- un axe Z, définissant une direction verticale, perpendiculaire au plan XY horizontal.

Le projecteur 2 comporte un boîtier 21 dont la face 22 externe comporte une courbure déterminée pour former avec les parties de carrosserie avoisinantes 40 (capot et aile) une continuité de forme contribuant à l'esthétisme de la face avant du véhicule 1.

Le dispositif 3 d'éclairage est agencé à l'intérieur du projecteur 2 pour adopter plusieurs configurations d'éclairage.

Le dispositif 3 d'éclairage comprend à cet effet, un équipage 5 mobile autour d'axes parallèles orientés en Z et comprend un module d'éclairage principal statique 6 assurant le niveau d'intensité réglementaire suivant l'axe longitudinal X du véhicule 1.

L'équipage 5 mobile comprend trois modules 51-53 d'éclairage et/ou de signalisation tournants aptes à se déplacer en rotation de plus ou moins 180° dans un sens et de plus ou moins 180° dans l'autre sens autour de leurs axes de rotation respectifs parallèles suivant Z.

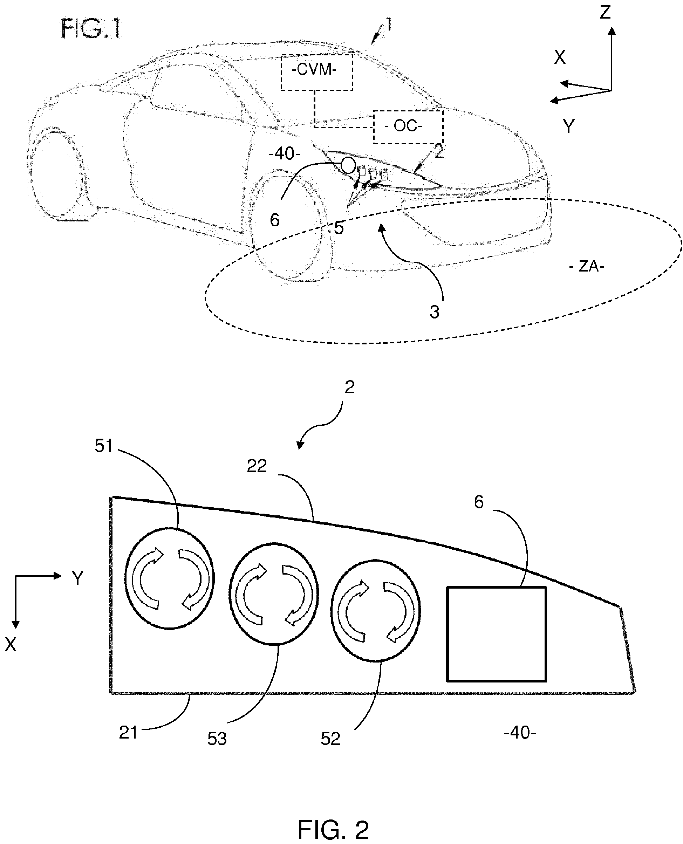

Les trois modules 51-53 sont disposés à proximité de l'aile avant droite 40 du véhicule 1 (à gauche du module d'éclairage principal 6, en considérant le projecteur avant droit 2 de la figure 2).

Ils sont disposés à égale distance les uns des autres à l'intérieur du projecteur 2 et leurs axes de rotation respectifs parallèles entre eux suivant Z, sont alignés suivant sensiblement un arc de cercle dont le rayon correspond sensiblement au rayon de courbure de la face externe 22 du projecteur 2 : le premier module référencé 51 est celui qui est le plus éloigné du module d'éclairage principal 6 fixe, le deuxième module référencé 52 est celui qui en est le plus proche (le plus à l'extérieur du véhicule 1) ; le troisième module référencé 53 est disposé entre les premier et deuxième modules 51 et 52.

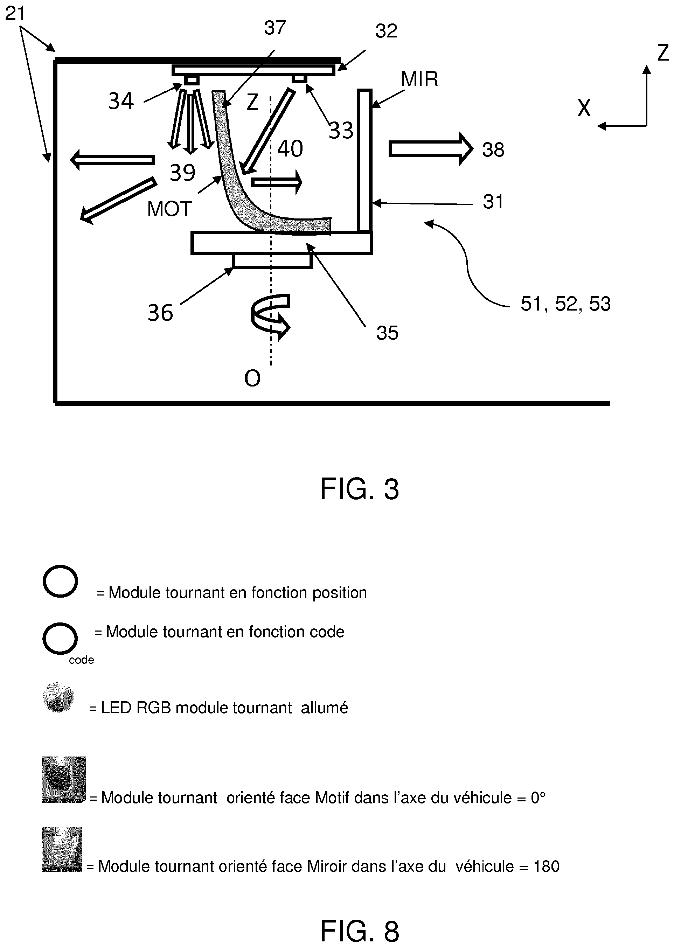

La figure 3 illustre un projecteur 2 selon l'invention, suivant une vue en coupe schématique, transversale, du projecteur 2 (suivant X), passant par le centre d'un des trois module tournants 51-52.

Chacun des trois modules tournants 51-53 comprend une monture définissant un plateau tournant 36 de forme générale cylindrique, monté à rotation sur le boitier 21 autour d'un axe vertical OZ.

Le plateau tournant 36 supporte sur sa face supérieure, un réflecteur 35 centrée sur l'axe OZ et solidaire du plateau 36. La face avant du réflecteur 35 définit une surface réfléchissante 37 de forme générale parabolique apte à réfléchir un faisceau lumineux émis par une première source de lumière 33, dite secondaire, comportant une ou plusieurs diode(s) électroluminescente(s) ou LEDs, aptes à générer une lumière blanche, dites LEDs blanches.

La ou les LEDs blanches 33 sont disposées sur un support fixe 32 par rapport au boiter 21, disposé en regard de la surface réfléchissante 37. Le support 32 est notamment une plaque de circuit imprimé (ou Printed Circuit Board - PCB) s'étendant parallèlement à la surface supérieure du plateau 36.

Le plateau 36 supporte en outre une lentille de projection 31, solidaire du plateau 36, s'étendant en regard de la surface réfléchissante 37 ; ladite lentille de projection 31 définissant une portion de paroi latérale cylindrique centrée dans le plan de coupe XZ. La lentille de projection 31 s'étend perpendiculairement au bord périphérique de la surface supérieure du plateau 36 supportant le réflecteur 35.

La lentille de projection 31 participe avec le réflecteur 35 à la projection du faisceau lumineux 40 vers l'extérieur du boitier 2, à l'avant 38 du véhicule 1.

La lentille 31 est réalisée, par exemple, dans un matériau transparent. Il s'agit de préférence d'une matière plastique synthétique, par exemple un polyacrylate, qui offre l'avantage d'offrir de bonnes propriétés optiques (notamment une bonne transparence) et mécaniques (notamment une bonne rigidité).

Le support PCB 32 supporte également une seconde source de lumière secondaire 34 disposée en aplomb de la face arrière du réflecteur 35.

Cette seconde source de lumière secondaire 34 est utilisée pour produire un rétro-éclairage 39 de lumière colorée, fixe ou changeante, vers les parois internes du boitier 21, masques ou d'autres parties appartenant au ou rapportées dans le boitier 21 ainsi que sur la face arrière du réflecteur 35.

Cette source de lumière colorée est obtenue à partir d'une diode électroluminescente particulière (LED en reprenant l'acronyme anglo-saxon) constituée de trois LEDs élémentaires de couleurs respectives rouge, verte et bleue (RGB en reprenant l'acronyme anglo-saxon), d'où la désignation de LED RGB, apte à produire un éclairage de couleurs changeantes obtenu par mélange des trois couleurs suivant les alimentations respectives des trois LEDs de couleur.

La face arrière du réflecteur 35 est recouverte d'un motif permettant d'identifier la marque du véhicule 1.

On désignera par la suite la face arrière du réflecteur 35, porteuse du motif par « face motif » MOT et la face avant du réflecteur 35, vue à travers la lentille de projection 31, par « face miroir » MIR.

Le motif peut être soit sérigraphié sur la face arrière du réflecteur 35 soit obtenu par grattage local de la face arrière. Il peut être également réalisé sur une coque rapportée sur la face arrière du réflecteur 35.

Une seconde lentille, non représentée, peut être disposée en regard de la face motif MOT et être supportée de la même manière que la lentille de projection 31 sur le plateau tournant 36.

Cette seconde lentille n'aura pas la même fonction optique que celle de la lentille de projection 31 mais sa tranche pourra être utilisée comme guide de lumière pour une lumière blanche émise par une autre source de lumière blanche non représentée qui serait disposée par exemple au voisinage de la LED RGB.

L'éclairage de la tranche aura pour effet de souligner la face motif MOT donc de la mettre en valeur.

Les deux faces (face motif MOT et face miroir MIR) sont donc disposées à 180° l'une de l'autre, ce qui signifie que pour passer d'une configuration dans laquelle la face miroir MIR est orientée vers l'arrière du boitier 21 (vers l'arrière du véhicule 1) à une configuration où cette même face MIR est orientée vers l'avant du véhicule 1, il faut faire tourner le module 51-53 d'un demi-tour (180°) autour de son axe de rotation OZ dans un sens ou dans l'autre (et réciproquement quand c'est la face motif MOT qui est exposée vers l'arrière du véhicule 1) .

Dans la configuration illustrée à la figure 3, le module tournant 51-53 est orienté avec sa face miroir MIR vers l'avant du véhicule 1 ; sa face motif MOT étant orientée vers le fond du boitier 21 du projecteur 2 (vers l'arrière du véhicule 1).

Les sources de lumières secondaires, blanches 33 ou colorées 34, peuvent être commandées indépendamment l'unes des autres ou conjointement. L'agencement des sources secondaires 33 et 34 sur leur support 32 PCB par rapport au réflecteur 35 et l'agencement du réflecteur 35 par rapport au support PCB 32 sont déterminés de manière à ce que les deux éclairages 39 et 40 soient de préférence confinés dans leurs zones d'éclairement respectives. A cet effet, la partie supérieure du réflecteur 35 est dimensionnée pour arriver au voisinage de la plaque support PCB 32 et servir de cloison pour les deux compartiments d'éclairage avant 40 et arrière 39.

Le système d'entraînement des modules tournants 51-53, non représenté, peut comprendre de manière connue, un mécanisme à base de bielle(s), cames et/ou d'engrenages, couplé aux modules tournants 51-53 pour assurer leur rotation de manière indépendante ou conjointe et/ou complémentaire avec des vitesses de rotation différentes.

Le système d'entraînement comprend, en outre, une motorisation telle qu'un moteur pas à pas, couplée au mécanisme et commandée par un organe de commande OC apte à commander les modules tournants 51-53 pour les faire tourner à différentes vitesses.

Le module d'éclairage principal 6 comporte de manière connue une source lumineuse apte à assurer l'éclairage principal du véhicule 1 dans l'axe longitudinal (selon X) du véhicule 1, par exemple une ampoule à gaz (typiquement halogène ou au xénon), ou encore à diode(s) électroluminescente(s) ou LED.

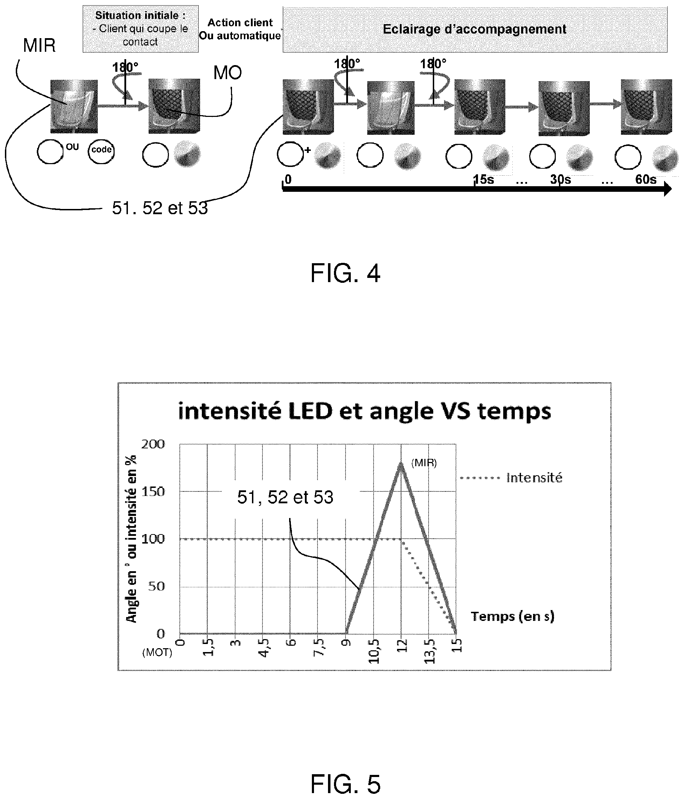

Les figures 4 et 5 illustrent un premier exemple de séquence d'animation visuelle d'une fonction d'éclairage et/ou de signalisation d'accompagnement qui n'est pas celui selon l'invention.

Dans ce premier exemple, la situation initiale est la suivante :
Le conducteur est dans son véhicule 1 et coupe le contact. Les modules tournants 51-53 qui avaient leurs faces miroir MIR orientées vers l'avant du véhicule 1, feux de position ou de croisement (code) allumés (faisceaux orientés parallèlement à l'axe longitudinal du véhicule 1), sont commandés pour effectuer une rotation synchrone de 180°. Ils présentent, à la fin de la première rotation, leur face motif MOT vers l'avant du véhicule 1. Dans cette position, le feu de position reste allumé et un éclairage de couleur changeante est diffusé en rétro-éclairage.

Sous l'action d'une commande automatique ou manuelle par le conducteur d'un éclairage et/ou de signalisation d'accompagnement, précédant sa sortie du véhicule 1, les trois modules tournants 51-53 initient un cycle de rotations synchrones en associant des lumières blanches 40 générées par les premières sources de lumière secondaires 33 aux lumières à couleurs changeantes 39 générées par les secondes sources de lumière secondaires 34.

Le chronogramme de la figure 5 illustre la loi de commande que suivent les trois modules 51-53 de manière synchrone, suite à l'activation automatique ou manuelle de l'éclairage d'accompagnement sur un cycle de T = 15s.

Au début de l'animation (t=0), les modules tournants 51-53 sont tous orientés avec leur face motif MOT vers l'avant du véhicule 1. Lorsque la commande d'éclairage et/ou de signalisation d'accompagnement est reçue de l'organe de commande OC, les modules tournants 51 et 53 restent immobiles faces motif MOT orientées vers l'avant du véhicule 1 pendant 9s, feu de position allumé et LED RGB 34 allumée, avec une intensité lumineuse maximale (100%) représentés en trait en pointillés.

L'animation se poursuit par une première rotation synchrone des modules tournants 51 et 53 de 180°, dans un premier sens de rotation, en 3s (période durant laquelle la face motif MOT est orientée vers l'arrière du véhicule 1 tandis que la face miroir MIR est orientée vers l'avant du véhicule 1).

Cette première rotation se poursuit d'une deuxième rotation de 180°, dans un deuxième sens, inverse du premier, également en 3s.

L'amplitude de l'intensité lumineuse des éclairages de lumière blanche 40 et de couleur 39 qui était maximale au début du cycle T, décline progressivement jusqu'à devenir nulle parallèlement à la seconde rotation.

La rotation des modules tournants 51 et 53 de 180° dans un sens, suivie d'une rotation de 180° dans l'autre sens, permet d'éclairer en mode feu de position ou code, au moins partiellement une zone avant ZA s'étendant à l'avant du véhicule 1 et ainsi d'accompagner le conducteur et/ou le passager (occupants du véhicule) dans cette zone durant tous leurs déplacements dans la zone avant.

Les modules tournants 51 et 53 permettent ainsi de balayer ladite zone avant ZA et remplir leur fonction d'éclairage et/ou de signalisation d'accompagnement tout en offrant une animation visuelle attractive.

De manière avantageuse, l'extinction de l'éclairage et/ou de signalisation d'accompagnement correspond à l'extinction progressive ou en « tout ou rien » de l'éclairage d'ambiance intérieur du véhicule 1.

La durée T du cycle peut être réglée à 15s, 30s ou 60s au maximum. La durée T du cycle peut être paramétrée en fonction du souhait du conducteur.

De manière avantageuse, lorsque l'éclairage d'ambiance intérieur du véhicule 1 permet un changement de couleur, alors la couleur du rétro-éclairage par les LEDs RGB 34, change de couleur de manière synchrone avec les mêmes teintes. Ces variations d'intensité et de couleurs des éclairages intérieur et extérieur, de manière synchronisée, renforcent l'impact visuel de l'animation d'accompagnement. La palette de couleurs des éclairages intérieur et extérieur peut être définie par le conducteur ou être prédéterminée par défaut dans le calculateur habitacle.

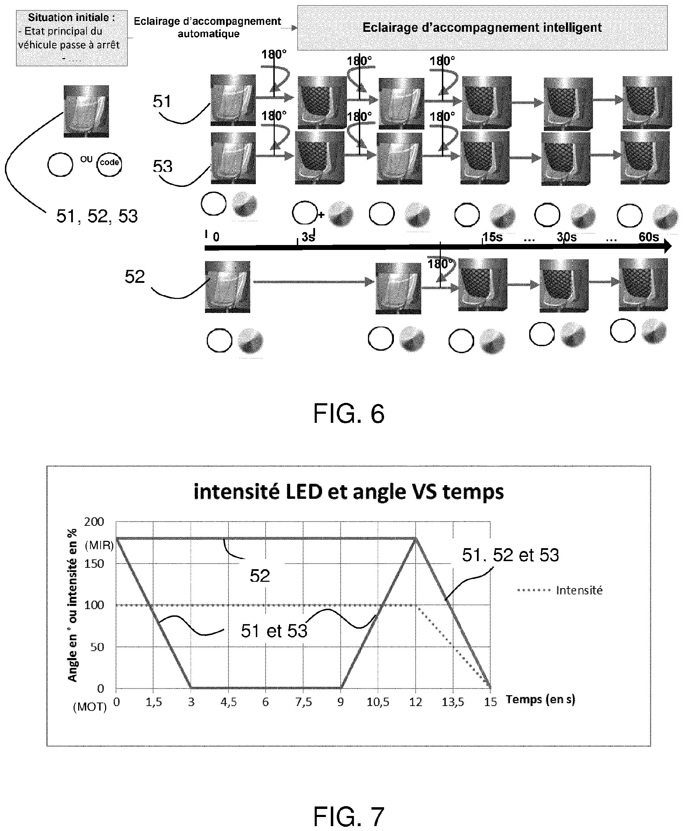

Les figures 6 et 7 illustrent un second exemple de séquence d'animation visuelle d'une fonction d'éclairage et/ou de signalisation d'accompagnement selon, celui-ci est l'invention.

Dans ce second exemple, la prestation supplémentaire recherchée par rapport au premier exemple de séquence d'animation visuelle est d'avoir un 52 (ou plusieurs) des modules tournants 51-53 qui éclaire en direction du conducteur et/ou d'un passager du véhicule 1 lorsque ces derniers sortent du véhicule 1 et ce, pendant toute la durée T d'activation de la fonction d'éclairage et/ou de signalisation d'accompagnement. Ce module 52 continue d'éclairer dans la direction du conducteur et/ou d'un passager lorsque ceux-ci se déplacent.

Pour ce faire, l'utilisation d'un dispositif de détection de présence comportant par exemple, un ou plusieurs capteurs de déplacement, une caméra vidéo multifonction CVM, ... est nécessaire afin d'identifier le ou les cibles et de pouvoir suivre leurs déplacements autour du véhicule 1.

Cette prestation est désignée par fonction d'éclairage d'accompagnement « intelligent » pour la distinguer de la fonction d'éclairage d'accompagnement « classique », activable manuellement, du type de celle du premier exemple décrit précédemment en référence aux figures 4 et 5.

L'activation de cette fonction d'éclairage et/ou de signalisation d'accompagnement « intelligent » ne se fait que lorsque la fonction « Eclairage d'accompagnement automatique » a été sélectionnée par le conducteur via un menu de paramétrage d'une IHM (Interface Homme Machine) dédiée non représentée.

La fonction d'éclairage et/ou de signalisation d'accompagnement « intelligent » est pilotée par l'organe de commande OC qui implémente la logique combinatoire suivante :
LORSQUE l'état principal du véhicule 1 passe à arrêt, vitesse nulle (situation initiale),
ET si les feux de croisement (ou code) et de position sont allumés suite à une demande d'allumage automatique des feux avant l'arrêt du véhicule 1,
ET s'il n'y a pas de demande manuelle d'allumage des feux de croisement (ou code) et de position,
ET si le conducteur a activé l'allumage automatique des feux (configuré en mode « actif ») via le menu de paramétrage de l'IHM (ou sur la position « AUTO » de l'IHM,
ET si le conducteur a activé l'éclairage et/ou de signalisation d'accompagnement automatique via le menu de paramétrage de l'IHM,
ET si la fonction "Commander les feux de position à la coupure contact" n'est pas activée,
ALORS, la fonction « Eclairage d'accompagnement automatique» est activée et les modules tournants 52, les plus proches de l'extérieur du véhicule (on considère ici les deux projecteurs avant), côté conducteur et côté passager, qui étaient déjà en position face miroir MIR orientée vers l'avant du véhicule 1 pour participer à l'éclairage et/ou signalisation standard du véhicule 1, restent dans cette position en attente d'une cible à viser et à éclairer puis à suivre en fonction des informations transmises par l'organe de commande OC auquel est couplé la caméra CVM sur la position du conducteur qui est devenu piéton.

Les deux autres modules tournants adjacents 51, 53 qui étaient également dans une position présentant leurs faces miroir MIR vers l'avant du véhicule 1 pour participer à l'éclairage et/ou signalisation standard du véhicule 1, au début du cycle de 15s, sont commandés pour effectuer une rotation de 180° dans un premier sens de rotation au bout des trois première secondes du cycle et présenter leurs faces motif MOT vers l'avant du véhicule 1 en reprenant ainsi la même configuration de celle décrite dans l'animation « éclairage d'accompagnement version classique » (FIG. 4 et 5).

Le module tournant extérieur 52 présente sa face miroir MIR vers l'avant du véhicule pendant les 12s du cycle.

Pendant ces 12s, le conducteur est « visé » et la partie de la zone avant ZA, dans laquelle il se déplace, est illuminée par le module tournant extérieur 52, côté conducteur et, si un passager est détecté du côté opposé, c'est alors le module tournant extérieur 52 opposé qui en assurera l'illumination. S'il n'y a que le conducteur de détecté, seul le module tournant extérieur 52, côté conducteur, illumine la zone avant ZA en suivant le conducteur.

Au bout des 12s, pour un cycle T de 15s, les modules tournants extérieur 52 sont commandés pour effectuer une rotation de 180° dans un sens pour présenter leurs faces motif MOT orientées vers l'avant du véhicule 1 à la fin du cycle T de 15s.

Entre temps, au bout de 9s du cycle T de 15s, les modules 51 et 53 qui présentaient leurs faces motif MOT vers l'avant du véhicule 1, sont commandés pour effectuer une rotation de 180° dans un deuxième sens, opposé au premier sens de rotation, de manière à présenter leurs faces miroir MIR vers l'avant du véhicule 1 au bout des 12s.

De manière synchrone avec le module tournant 52, les autres modules tournants 51 et 53 qui étaient configurés avec leurs faces miroir MIR orientées vers l'avant du véhicule 1, sont commandés au bout des mêmes 12s pour effectuer une rotation de 180°, synchrone, dans le même premier sens de rotation, pour présenter, à la fin du cycle T de 15s, leurs faces motif MOT toutes orientées vers l'avant du véhicule 1.

La durée totale du cycle T est paramétrable à 15, 30s ou 60s.

La loi de commande de l'intensité globale de l'éclairage et/ou signalisation reste, dans ce second exemple d'animation (Fig. 7), identique à celle du premier exemple (Fig. 5).

On notera que la configuration des modules 51-53 présentant leurs faces motifs MOT orientées vers l'avant du véhicule, correspond à la fin du cycle des animations aussi bien pour le premier exemple d'animation (fig. 4 et 5) que pour le second exemple d'animation (Fig. 5 et 6).

On réalise ainsi en dispositif interactif, procurant en temps réel un éclairage d'accompagnement du conducteur et/ou des passagers du véhicule, qui met à profit de façon optimale les diverses fonctions d'éclairage du véhicule, actionnées en séquence, séparément ou en combinaison, de la manière la mieux adaptée selon les déplacements du conducteurs et/ou des passagers, devenus piétons, à l'extérieur et au voisinage du véhicule.

Ces animations visuelles peuvent s'intégrer dans une fonction d'éclairage et/ou de signalisation générale dite « d'accueil » qui se décline sous la forme de différentes mises en scènes de l'éclairage et/ou de la signalisation du véhicule 1 à destination du conducteur et des passagers du véhicule 1.

Ces mises en scène mettent notamment en jeu les moyens d'éclairage et/ou de signalisation extérieurs et des moyens d'éclairage intérieurs du véhicule 1 ; moyens qui peuvent par ailleurs participer à des ambiances visuelles entrant dans des ambiances « polysensorielles » personnalisables, en coopération avec d'autres organes ou équipements du véhicule.

## Revendications

1. Dispositif d'éclairage et/ou de signalisation (1) d'accompagnement d'un véhicule automobile (1), apte à illuminer une zone (ZA) s'étendant autour du véhicule (1), ledit dispositif comportant au moins deux premières sources de lumière blanche (33) associées respectivement à au moins des premier (51, 53) et deuxième (52) modules d'éclairage et/ou de signalisation tournants, aptes à générer respectivement des faisceaux lumineux suivant des directions déterminées, **caractérisé en ce que** chacun des premier (51, 53) et deuxième (52) modules tournants présentent une première face (MIR) et une deuxième face (MOT) opposée à la première : la première face (MIR) comportant une surface réfléchissante (37) apte à orienter le faisceau lumineux (40) émis par la première source de lumière blanche (33) vers ladite zone (ZA) et la deuxième face (MOT) supportant un motif ; ledit dispositif comportant en outre un organe de commande (OC), apte à commander la rotation et l'intensité des premier et deuxième modules (51, 52, 53) pendant un cycle de durée déterminée (T),
l'organe de commande étant adapté pour commander la rotation et l'intensité lumineuse d'au moins un premier module (51, 53) tournant pendant le cycle de durée déterminée (T) pour orienter sa première face (MIR) vers ladite zone (ZA) de manière à balayer au moins partiellement ladite zone (ZA) par une succession d'au moins deux rotations successives d'au moins 180° dans un sens puis dans l'autre du module tournant (51, 53) avec une intensité lumineuse déterminée de la première source de lumière blanche (33) en fonction du temps, et orientant les premier et deuxième modules (51, 52, 53) pour présenter de manière synchrone à la fin du cycle de durée déterminée (T) leurs deuxièmes faces (MOT) de manière visible de l'extérieur du véhicule (1),
l'organe de commande (OC) étant couplé à un dispositif de détection de présence (CVM) apte à détecter et à suivre les déplacements d'un ou des occupants du véhicule (1) à l'extérieur du véhicule (1), dans ladite zone (ZA) ; ledit organe de commande (OC) orientant pendant le cycle de durée déterminée (T) la première face (MIR) d'au moins un deuxième module tournant (52) vers le ou les occupants détectés puis suivis par le dispositif de détection de présence (CVM) durant leurs déplacements dans ladite zone (ZA).

2. Dispositif selon la revendication 1, **caractérisé en ce qu'**il comporte au moins une deuxième source de lumière (34) apte à générer un faisceau lumineux (39) en direction de la deuxième face (MOT) des modules tournants (51, 52) ; ladite source de lumière (34) étant apte à générer une lumière à couleur changeante.

3. Dispositif selon la revendication précédente, **caractérisé en ce que** ledit organe de commande (OC) est apte à orienter la première face (MIR) du module tournant (52) le plus à l'extérieur du véhicule (1) quand il est monté dans le véhicule (1), vers le ou les occupants détectés puis suivis par le dispositif de détection (CVM) durant leurs déplacements dans ladite zone (ZA).

4. Dispositif selon l'une des revendications précédentes, **caractérisé en ce qu'**il comprend un troisième module tournant (53) disposé entre les premier et deuxième modules (51 et 52) ; les premier et troisième modules (51 et 53) tournants étant synchronisés entre eux.

5. Projecteur (2) de véhicule (1) automobile comportant un boitier (21), **caractérisé en ce que** ledit boitier (21) supporte à rotation des modules tournants (51-53) d'un dispositif selon l'une des revendications précédentes.

6. Procédé de commande d'un dispositif d'éclairage selon l'une des revendications 1 à 5, **caractérisé en ce qu'**il consiste dans la durée déterminée (T) à commander une première rotation d'au moins un premier module tournant (51, 53) d'un angle d'au moins 180° autour de son axe de rotation (OZ) suivant un premier sens de rotation, suivie d'une deuxième rotation selon un deuxième sens de rotation opposé au premier pour effectuer un balayage de la zone (ZA)et **en ce qu'**il consiste dans la durée déterminée (T), à détecter qu'au moins un occupant du véhicule est dans la zone (ZA) et à commander la rotation d'au moins un deuxième module tournant (52) pour éclairer la zone (ZA) en suivant les déplacements du ou des occupants du véhicule (1) à l'extérieur du véhicule (1), dans ladite zone (ZA), les premier et deuxième modules (51, 52, 53) étant orientés pour présenter de manière synchrone à la fin de la durée déterminée (T) leurs deuxièmes faces (MOT) de manière visible de l'extérieur du véhicule (1).

7. Procédé selon la revendication 6, **caractérisé en ce qu'**il consiste à commander une diminution progressive de l'intensité de l'éclairage et/ou de signalisation d'accompagnement à la fin de la période (T) déterminée.

8. Procédé selon la revendication précédente, **caractérisé en ce qu'**il consiste à commander une diminution progressive de l'intensité de l'éclairage et/ou de signalisation d'accompagnement à la fin de la période (T) déterminée, en fonction d'une diminution progressive de l'intensité d'un 'éclairage d'ambiance intérieur du véhicule (1).

9. Procédé selon l'une quelconque des revendications 6 à 8, **caractérisé en ce qu'**il consiste à commander un changement de couleur de l'éclairage et/ou de signalisation d'accompagnement en fonction d'un changement de couleur d'un éclairage d'ambiance intérieur du véhicule (1).

## Patentansprüche

1. Gerät der Beleuchtung und/oder Signallichter (1) der Begleitung eines Kraftfahrzeugs (1), bereit, eine Zone (ZA) zu belichten verlängernd um das Fahrzeug (1), das vorher erwähnte Gerät, das zwei erste Quellen vom weißen Licht (33) enthält beziehungsweise verbunden mit mindestens mit erstem (51,53) und an zweiter Stelle (52) Drehenmodule Beleuchtung und/oder Signallichter, bereit beziehungsweise, Lichtstrahlen das Folgen der entschlossenen Richtungen zu erzeugen, kennzeichnete herein, dass jedes der ersten (51,53) und an zweiter Stelle (52) rotierende Module stellen ein erstes Gesicht dar (MIR) und ein zweites Gesicht (MOT) entgegensetzte dem ersten: das erste Gesicht (MIR) eine reflektierende Oberfläche (37) enthalten bereiten vor, um den Lichtstrahl (40) zu verweisen ausgestrahlt durch die erste Quelle des weißen Lichtes (33) entwurmt die vorher erwähnte Zone (ZA) und das zweite Gesicht (MOT) ein Muster stützend; das vorher erwähnte Gerät außerdem, das ein Steuergerät (OC) enthalten, bereites, die Rotation und die Intensität der ersten und zweiten Module (51, 52,53) während eines Zyklus begrenzter Dauer (T) zu beherrschen, das Steuergerät, das angepasst wird, um die Rotation und die Lichtstärke mindestens eines ersten Moduls (51, 53) zu beherrschen drehend während des Zyklus begrenzter Dauer (T), um sein erstes Gesicht (MIR) zu verweisen entwurmt die vorher erwähnte Zone (ZA) um teilweise zu fegen mindestens die vorher erwähnte Zone (ZA) durch eine Reihenfolge von mindestens zwei aufeinander folgenden Rotationen von mindestens 180° in einer Richtung dann in das andere des rotierenden Moduls (51, 53) mit einer gegebenen Lichtstärke der ersten weißen Lichtquelle (33) entsprechend Zeit und der Richtung der ersten und zweiten Module (51, 52, 53) um sich auf eine synchrone Art am Ende des Zyklus begrenzter Dauer (T) darzustellen, das ihre Sekunde (MOT) auf eine sichtbare Art der Außenseite des Fahrzeugs (1) gegenüberstellt, das Steuergerät (OC), das mit einem Gerät der Entdeckung von Anwesenheit verbunden wird (CVM) bereiten vor, um Verschiebungen von Inhabern des Fahrzeugs (1) außerhalb des Fahrzeugs (1), in der vorher erwähnten Zone (ZA) zu ermitteln und zu folgen; das vorher erwähnte Steuergerät (OC) während des Zyklus begrenzter Dauer (T) das erste Gesicht (MIR) mindestens eines zweiten Drehenmoduls (52) in Richtung zu den ermittelten Inhabern verweisend dann gefolgt vom Gerät der Entdeckung von Anwesenheit (CVM) während ihrer Verschiebungen in der vorher erwähnten Zone (ZA).

2. Gerät entsprechend Anspruch 1, kennzeichnete, in dem es mindestens eine zweite Lichtquelle (34) vorbereitet, um einen Lichtstrahl (39) in Richtung des zweiten Gesichtes (MOT) der rotierenden Module (51, 52) zu erzeugen enthält; die vorher erwähnte Lichtquelle (34) seiend bereit, ein Licht mit ändernder Farbe zu erzeugen.

3. Gerät entsprechend der vorausgegangenen Forderung, kennzeichnete, in der das vorher erwähnte Steuergerät (OC) bereit ist, das erste rotierende Modul des Gesichtes (MIR) (52) außerhalb des Fahrzeugs (1), wenn es in das Fahrzeug (1), gekommen wird in Richtung zu den ermittelten Inhabern zu verweisen, die dann vom Gerät der Entdeckung gefolgt werden (CVM) während ihrer Verschiebungen in der vorher erwähnten Zone (ZA).

4. Gerät entsprechend einer der vorausgegangenen Forderungen, kennzeichnete in dem, das sie ein an dritter Stelle Drehenmodul (53) ausgebreitet zwischen den ersten und zweiten Modulen miteinschließt (51 und 52); erste und dritte rotierende zwischen ihnen synchronisiert werden der Module (51 und 53).

5. Projektor (2) des Automobils des Fahrzeugs (1), das eine Rechtssache (21) enthält, kennzeichnete, in der die vorher erwähnten Unterstützungen der Rechtssache (21), die rotierende Module (51-53) drehen eines Gerätes entsprechend einer der vorausgegangenen Forderungen.

6. Prozess des Befehls eines Gerätes der Beleuchtung entsprechend einem von Ansprüchen 1 bis 5, kennzeichnete, in denen er in der begrenzten Dauer besteht (T), welche die erste Rotation mindestens eines ersten drehenden Moduls beherrscht (51, 53) von einem Winkel von mindestens 180° um seine Drehachse (Unze) anordnungsgemäß einen ersten Drehsinn, gefolgt von der zweiten Rotation anordnungsgemäß einen zweiten Drehsinn, der dem ersten entgegengesetzt wird, um durchzuführen ein Kehren der Zone (ZA) und in, was er in der begrenzten Dauer (T) besteht, um zu ermitteln dass mindestens ein Inhaber des Fahrzeugs ist in der Zone (ZA) und die Rotation von beherrschen mindestens ein zweites drehendes Modul (52) um die Zone (ZA) zu erklären während das Folgen von Verschiebungen der Inhaber des Fahrzeugs (1) außerhalb des Fahrzeugs (1), in der vorher erwähnten Zone (ZA), die ersten und zweiten Module (51, 52, 53), die verwiesen werden, um sich auf eine synchrone Art am Ende der begrenzten Dauer (T) darzustellen ihre Sekunde (MOT) auf eine sichtbare Art der Außenseite des Fahrzeugs (1) gegenüberstellt.

7. Prozess entsprechend Anspruch 6, kennzeichnete in dem, den er besteht, wenn er eine progressive Reduzierung in der Intensität der Beleuchtungs- und/oder Signallichter der Begleitung am Ende des gegebenen Zeitraums (T) beherrscht.

8. Prozess entsprechend der vorausgegangenen Forderung, kennzeichnete in dem, den sie besteht, wenn sie eine progressive Reduzierung in der Intensität der Beleuchtungs- und/oder Signallichter der Begleitung am Ende des gegebenen Zeitraums (T) beherrschen, entsprechend einer progressiven Reduzierung in der Intensität eines Innenambientebeleuchtens des Fahrzeugs (1).

9. Prozess entsprechend irgendwelchen von Ansprüchen 6 bis 8, kennzeichnete in dem, den er besteht, wenn er eine Verfärbung der Beleuchtungs- und/oder Signallichter der Begleitung entsprechend einer Verfärbung einer überwundenen Innenbeleuchtung des Fahrzeugs (1) beherrscht.

## Claims

1. Device of lighting and/or signal lights (1) of accompaniment of a motor vehicle (1), ready to illuminate a zone (ZA) extending around the vehicle (1), the aforementioned device comprising two first sources of white light (33) respectively associated with at least with first (51.53) and second (52) turnings modules of lighting and/or signal lights, ready respectively to generate beams of light following of the determined directions, **characterized in that** each one of the first (51.53) and second (52) revolving modules present a first face (MIR) and a second face (MOT) opposed to the first: the first face (MIR) comprising a reflective surface (37) ready to direct the beam of light (40) emitted by the first source of white light (33) worms the aforementioned zone (ZA) and the second face (MOT) supporting a pattern; the aforementioned device comprising moreover a control unit (OC), ready to command the rotation and the intensity of the first and second modules (51, 52.53) during a cycle of limited duration (T), the control unit being adapted to command the rotation and the luminous intensity of at least a first module (51, 53) turning during the cycle of limited duration (T) to direct its first face (MIR) worms the aforementioned zone (ZA) so as to sweep at least partially the aforementioned zone (ZA) by a succession of at least two successive rotations of at least 180° in a direction then in the other of the revolving module (51, 53) with a given luminous intensity of the first white source of light (33) according to time, and directing the first and second modules (51, 52, 53) to present in a synchronous way at the end of the cycle of limited duration (T) their second faces (MOT) in a visible way of the outside of the vehicle (1), the control unit (OC) being coupled with a device of detection of presence (CVM) ready to detect and follow displacements of occupants of the vehicle (1) outside the vehicle (1), in the aforementioned zone (ZA); the aforementioned control unit (OC) directing during the cycle of limited duration (T) the first face (MIR) of at least a second turning module (52) towards the detected occupants then followed by the device of detection of presence (CVM) during their displacements in the aforementioned zone (ZA).

2. Device according to claim 1, **characterized in that** it comprises at least a second source of light (34) ready to generate a beam of light (39) in the direction of the second face (MOT) of the revolving modules (51, 52); the aforementioned source of light (34) being ready to generate a light with changing colour.

3. Device according to the preceding claim, **characterized in that** the aforementioned control unit (OC) is ready to direct the first face (MIR) more revolving module (52) outside the vehicle (1) when it is gotten into the vehicle (1), towards the detected occupants then followed by the device of detection (CVM) during their displacements in the aforementioned zone (ZA).

4. Device according to one of the preceding claims, **characterized in that** it includes a third turning module (53) laid out between the first and second modules (51 and 52); the first and third modules (51 and 53) revolving being synchronised between them.

5. Projector (2) of vehicle (1) automobile comprising a case (21), **characterized in that** the aforementioned case (21) supports rotating revolving modules (51-53) of a device according to one of the preceding claims.

6. Process of command of a device of lighting according to one of claims 1 to 5, **characterized in that** it consists in the limited duration (T) commanding the first rotation of at least a first module turning (51, 53) of an angle of at least 180° around its axis of rotation (OZ) according to a first direction of rotation, followed by the second rotation according to a second direction of rotation opposed to the first to carry out a sweeping of the zone (ZA) and in what it consists in the limited duration (T), to detect that at least an occupant of the vehicle is in the zone (ZA) and to command the rotation of at least a second module turning (52) to clarify the zone (ZA) while following displacements of the occupants of the vehicle (1) outside the vehicle (1), in the aforementioned zone (ZA), the first and second modules (51, 52, 53) being directed to present in a synchronous way at the end of the limited duration (T) their second faces (MOT) in a visible way of the outside of the vehicle (1).

7. Process according to claim 6, **characterized in that** it consists in commanding a progressive reduction in the intensity of the lighting and/or signal lights of accompaniment at the end of the period (T) given.

8. Process according to the preceding claim, **characterized in that** it consists in commanding a progressive reduction in the intensity of the lighting and/or signal lights of accompaniment at the end of the period (T) given, according to a progressive reduction in the intensity of an interior ambiance lighting of the vehicle (1).

9. Process according to any of claims 6 to 8, **characterized in that** it consists in commanding a colour change of the lighting and/or signal lights of accompaniment according to a colour change of an interior subdued lighting of the vehicle (1).
